# EUROPEAN PATENT SPECIFICATION

(11) **EP 4 517 293 B1**
(45) Date of publication and mention of the grant of the patent: **19.08.2026**
(21) Application number: 23811877.2
(22) Date of filing: 25.05.2023
(51) Int. Cl.: G01N 3/20, G01N 3/08, G01N 17/00

(54) **METHOD FOR ASSESSING DELAYED FRACTURE CHARACTERISTICS OF FORMED COMPONENT, AND METHOD FOR MANUFACTURING FORMED COMPONENT**
VERFAHREN ZUR BEURTEILUNG VON VERZÖGERTEN BRUCHEIGENSCHAFTEN EINES FORMTEILS UND VERFAHREN ZUR HERSTELLUNG EINES FORMTEILS
PROCÉDÉ D'ÉVALUATION DE CARACTÉRISTIQUES DE FRACTURE RETARDÉE D'UNE PIÈCE FORMÉE ET PROCÉDÉ DE FABRICATION D'UNE PIÈCE FORMÉE

(30) Priority: 25.05.2022 JP 2022085553
(43) Date of publication of application: 05.03.2025
(73) Proprietor: JFE Steel Corporation, Tokyo 100-0011 (JP)
(72) Inventor: MATSUKI, Yuichi, Tokyo 100-0011 (JP); SHINMIYA, Toyohisa, Tokyo 100-0011 (JP); NAKAGAWA, Kinya, Tokyo 100-0011 (JP); YAMASAKI, Yuji, Tokyo 100-0011 (JP); KAWAUCHI, Saki, Toyota-shi, Aichi 471-8571 (JP)
(74) Representative: Haseltine Lake Kempner LLP
(86) International application number: PCT/JP2023/019489
(87) International publication number: WO 2023/229005

(56) References cited:
- JP-A- 2010 107 297
- JP-A- 2022 024 814
- JP-A- H07 146 225
- JP-B1- 7 004 126
- JP-B1- 7 004 126

## Description

### Technical Field

The present invention is a technology of assessing the delayed fracture characteristics in a sheared end surface of a formed component manufactured by forming, such as press forming. The present invention is a technology related to a method for assessing the delayed fracture characteristics of a formed component and a method for manufacturing a formed component using the method.

Herein, an end surface obtained by applying shearing processing to a metal sheet is referred to as the sheared end surface. The present invention is a technology suitable particularly for formed components containing high-strength steel sheets having a tensile strength of 980 MPa or more (high-tensile strength steel sheets). In this specification, steel sheets having a tensile strength of 1470 MPa or more among the high-strength steel sheets are referred to as ultrahigh-strength steel sheets.

### Background Art

At present, automobiles have been required to improve fuel consumption by a reduction in weight and collision safety. For the purpose of achieving both the reduction in weight of a vehicle body and the protection of passengers in the event of a collision, the high-strength steel sheets are used for the vehicle body. Particularly in recent years, the high-strength steel sheets having a tensile strength of 980 MPa or more have begun to be applied to the vehicle body. As one of the problems when the high-strength steel sheets are applied to the vehicle body, a delayed fracture is mentioned. Particularly in the high-strength steel sheets having a tensile strength of 980 MPa or more, the delayed fracture occurring from the sheared end surface is a significant problem. The sheared end surface is an end surface after shearing processing. This problem is particularly problematic in the ultrahigh-strength steel sheets having a tensile strength 1470 MPa or more among the high-strength steel sheets.

Herein, it is known that a large tensile stress remains in the sheared end surface. The remaining of the large tensile stress raises a concern that the delayed fracture with time occurs in a formed component manufactured from a metal sheet.

To predict the delayed fracture in the sheared end surface in advance, it is necessary to prepare a test piece for assessment and place the test piece in a hydrogen entry environment. Further, the sheared end surface has properties changing by plastic deformation in shearing processing. In general, a risk of the delayed fracture in the sheared end surface increases. Thus, PTL 1, for example, assesses the occurrence of the delayed fracture as follows. More specifically, PTL 1 applies compression processing in the sheet thickness direction by rolling to the sheared end surface of the test piece. Thereafter, the test piece is placed in a hydrogen entry environment, and the occurrence of the delayed fracture is assessed.

Herein, a test is supposed in which the sheared end surface kept as-sheared is placed in a hydrogen entry environment under no load. Even when the delayed fracture does not occur in this test, the delayed fracture sometimes occurs when the test is performed while a stress is being applied from the outside. This is because a load stress from the outside is added to the large tensile stress remaining in the sheared end surface. Therefore, in PTL 2, for example, a constant load by tension is loaded to an assessment sample including the sheared end surface, the assessment sample is placed in a hydrogen entry environment in a restrained state, and the delayed fracture characteristics are assessed. As a more simplified method, in PTL 3, a test piece is placed in a hydrogen environment in a state where a load by bending is being loaded to the test piece, and the delayed fracture characteristics are assessed. However, in PTL 3, the sheared end surface is not targeted, and the principal object is to assess the delayed fracture characteristics in the front surface of the test piece. Therefore, in PTL 3, the front surface of the sheared end surface of an assessment sample is sealed by a resin coating, and the sheared end surface is excluded from an assessment target.

The present inventors have conducted various examinations and obtained the following findings. More specifically, the present inventors have obtained a finding that there is another problem with prediction or prevention of the occurrence of the delayed fracture based on these delayed fracture assessment techniques for actual automotive components.

For example, the introduction of a strain by rolling as in PTL 1 has the following problem. More specifically, there is such a problem that the introduction of a strain by rolling as in PTL 1 deviates from a deformation state in a forming strain introduced by press forming, which is used for automotive components. In the press forming, uniaxial tension and compression and a bending deformation by a combination of the uniaxial tension and compression are introduced into the sheared end surface. Therefore, the assessment technique as in PTL 1 does not achieve sufficient assessment. PTLS 2, 3 do not consider changes in the delayed fracture characteristics by plastic deformation after shearing processing of the sheared end surface. Therefore, the assessment is not sufficient as a delayed fracture assessment in formed components where various forming strains are generated in the sheared end surface.

In all the assessment methods of PTLS 1 to 3, the occurrence or non-occurrence and time of the delayed fracture under laboratory-like individual hydrogen entry conditions and stress conditions were merely assessed.

PTL 4 discloses a method for evaluating delayed fracture characteristics generated in a molded product after press molding of a metal plate.

### Citation List

### Patent Literatures

PTL 1: JP 2020-41837 A
PTL 2: JP 5196926 B
PTL 3: JP 5971058 B
PTL 4: JP 7 004126 B

### Summary of Invention

### Technical Problem

Conventionally, an assessment in the following viewpoint has not been conducted. The viewpoint is the degree of margin in the conditions of the hydrogen entry environment or the stress with respect to the occurrence of the delayed fracture, as compared with the hydrogen entry environment or the stress in actual automotive components.

Then, the present inventors have obtained the following finding. More specifically, in the actual automotive components, forming strains different among the formation places of the sheared end surfaces are introduced into a metal sheet to be processed. The present inventors have obtained a finding that the forming strain causes a change in the delayed fracture characteristics by plastic deformation. Further, the present inventors have obtained a finding that, in the sheared end surface, a load stress after press forming is added to a residual stress by shearing, so that the delayed fracture is likely to occur.

Further, the present inventors have obtained the following finding. More specifically, a case is supposed in which a forming residual stress is loaded to the sheared end surface into which a forming strain is introduced in a certain hydrogen entry environment. In this case, the present inventors have obtained a finding that it is very important to assess the degree of margin to the occurrence of the delayed fracture in the sheared end surface of a formed component. More specifically, the present inventors have obtained a finding that such an assessment is very important in avoiding the delayed fracture in the sheared end surfaces in automotive components.

As described above, the sheared end surface properties change by plastic deformation by press forming in automotive components. Conventionally, there has been no index that enables the prediction of the occurrence of the delayed fracture as compared with stresses that are generated in actual automotive components. Therefore, there has been no technique by which the delayed fracture can be assessed from the viewpoint of a stress margin.

The present invention focuses on the above-described point and aims to enable a more accurate assessment of the delayed fracture characteristics in the sheared end surface in the formed components in use. The present invention aims to enable the manufacture of formed components in which the delayed fracture is suppressed.

### Solution to Problem

To solve the problem, one aspect of the present invention is a method for assessing delayed fracture characteristics of a formed component for assessing the delayed fracture characteristics in a sheared end surface of a formed component, the formed component being manufactured by forming a metal sheet containing a high-strength steel sheet and being assembled to another component for use, the method including: a first step of determining a stress margin being an allowance value of an external load stress, in which a delayed fracture in a sheared surface of the metal sheet does not occur, with an amount of strain as a variable based on results of a test including a step of restraining the metal sheet in a state where a predetermined load stress is loaded to the sheared surface of the metal sheet and a step of placing the metal sheet for a predetermined time in a predetermined hydrogen entry environment in the restrained state; a second step of performing forming analysis of forming the metal sheet into the formed component and determining a residual stress and the amount of strain in the sheared end surface of the formed component generated when the metal sheet is formed into the formed component; a third step of determining a load stress to be loaded to the sheared end surface by assembling the formed component to another component; and a fourth step of assessing a margin of the delayed fracture in the formed component based on the stress margin of the metal sheet with the amount of strain determined in the second step as a variable and a total stress of the residual stress determined in the second step and the load stress determined in the third step.

The forming is press forming, for example.

### Advantageous Effects of Invention

The aspect of the present invention more accurately assesses the delayed fracture characteristics in the sheared end surface in the formed component in a state of being placed in a use environment. As a result, the formed component in which the delayed fracture is suppressed can be manufactured.

At this time, the stress margin that is an index of the delayed fracture assessment has a stress as a unit and enables the assessment from the viewpoint of the margin by stress. Therefore, when the high-strength steel sheets are applied to various components, such as panel components and structural and frame components, of automobiles, for example, the following can be achieved. More specifically, the aspect of the present invention enables the prediction of the occurrence of the delayed fracture for the formed component, including the margin having a stress dimension.

The aspect of the present invention enables a reduction in weight of an automobile body by expanding the application range of ultrahigh-strength steel sheets, for example.

### Brief Description of Drawings

FIGS. 1A and 1B are conceptual views each illustrating the relation between a delayed fracture and a stress margin of a sheared end surface;
FIG. 2 is a view illustrating a configuration example according to an embodiment based on the present invention;
FIG. 3 is a view illustrating a configuration example of a first step;
FIG. 4 is a conceptual view illustrating the relation between a delayed fracture and the stress margin of a sheared end surface when a residual stress remains in bending forming;
FIG. 5 is a view illustrating an example of a processing flow that can be used in an assessment in this technique;
FIG. 6 is a view illustrating an example of a function for the amount of strain of the stress margin;
FIG. 7 is a view illustrating the shape of a formed component (actual component) in this example;
FIG. 8 is a view illustrating an example of a delayed fracture determination using the stress margin;
FIG. 9 is a view illustrating an example of a delayed fracture determination by a total stress of a residual stress and an external load stress by assembly or use; and
FIG. 10 is a view when an intermediate step is added such that the delayed fracture does not occur, reviewing forming conditions, and is a view illustrating an example of a delayed fracture determination by a total stress of a residual stress and an external load stress by assembly or use.

### Description of Embodiments

### (Details of disclosure)

First, findings of the present disclosure are described.

The present inventors have found the following findings (1) to (3) in assessing the delayed fracture in a sheared end surface.
(1) A case is supposed in which a metal sheet is placed for a predetermined time in a hydrogen entry environment in a state where a load stress (external load stress) by a constant load is loaded to the sheared end surface and the metal sheet is restrained. In this case, for the load stress, there is a load stress at the limit where the delayed fracture does not occur in the sheared end surface (also referred to as a limit load stress). This is because the delayed fracture occurs when the total of a residual stress by shearing processing and a load stress from the outside in the sheared end surface reaches the threshold for the occurrence of the delayed fracture in the sheared end surface.
(2) The limit load stress in which the delayed fracture does not occur changes by the amount of strain by tension and compression of a forming strain to be applied after shearing in the sheared end surface. This is because the residual stress of the sheared end surface changes by the forming strain.
(3) Accordingly, the limit load stress of each sheared end surface changes by the amount of the forming strain applied to the sheared end surface and the load stress (external load stress). When the metal sheet is placed for the predetermined placement time in the predetermined hydrogen entry environment, the load stress at the limit where the delayed fracture does not occur in the sheared end surface can be summarized as follows. More specifically, the load stress at the limit can be summarized as an index of "stress margin" considering the amount of the forming strain and the load stress (external load stress).

Herein, the present disclosure defines the allowance of the external load stress, in which the delayed fracture does not occur, corresponding to the amount of strain possessed by the sheared end surface as the "stress margin".

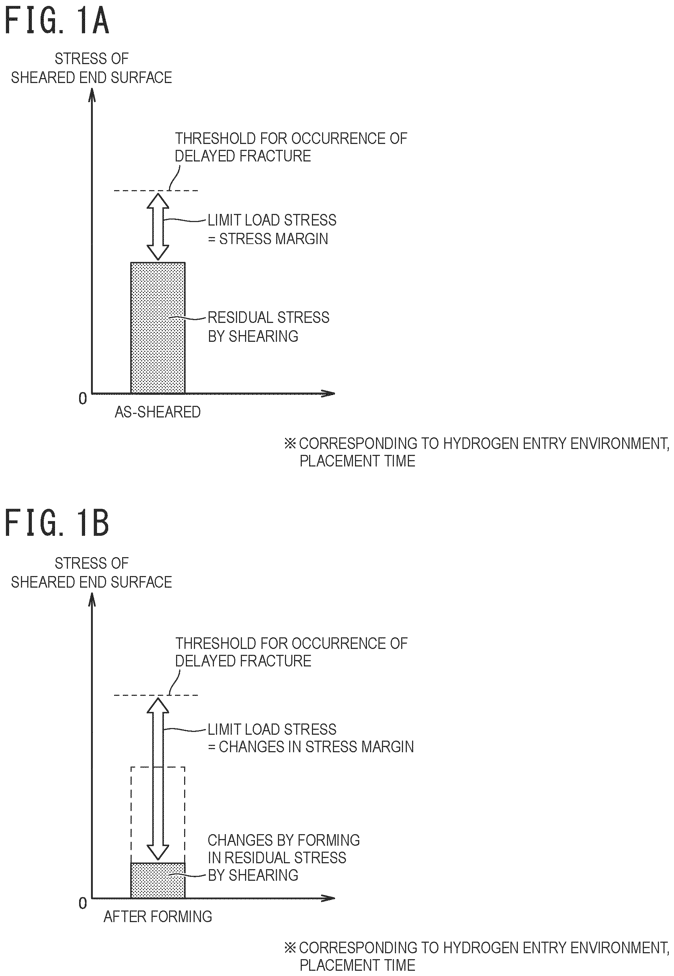

FIGS. 1A and 1B illustrate conceptual views for explaining (1) to (3) above. FIG. 1A illustrates the state of the load stress at the limit when no forming strain is applied, for a metal sheet having a sheared end surface formed by shearing an end part. On the other hand, FIG. 1B illustrates the state of the load stress at the limit when the forming strain is applied after the sheared end surface is formed.

FIGS. 1A and 1B illustrate examples of a case where the residual stress decreases by applying the forming strain to the metal sheet before the metal sheet is press formed.

Herein, the delayed fracture occurs when the total of the residual stress by shearing and the load stress from the outside reaches the threshold for the occurrence of the delayed fracture. Accordingly, when the residual stress of the sheared end surface changes by the forming strain, the limit load stress in which the delayed fracture does not occur also changes. The limit load stress is a difference between the residual stress of the sheared end surface and the threshold for the occurrence of the delayed fracture, and is the external load stress at the limit where the sheared end surface does not cause the delayed fracture.

In view of the above, the index of the stress margin is prescribed as follows. More specifically, the present disclosure defines the allowance of the external load stress in which the delayed fracture does not occur considering the forming strain to be applied in the sheared end surface as the "stress margin". More specifically, this embodiment prescribes the allowance of the external load stress by the index of the stress margin with the forming strain as a variable.

Herein, the residual stress in the sheared end surface by shearing is present only in a very small region of the extremely surface layer about 100 µm from the front surface of the sheared end surface. Therefore, changes in the residual stress are difficult to calculate by common CAE using a shell element or the like. Stress in microscopic regions can be measured by X-ray stress measurement or the like. However, there are such a problem that the measured value changes depending on the measurement range and such a problem that the measurement depth is limited to the top layer of a material. Accordingly, the large or small of the measured value sometimes does not necessarily correspond to a risk of the delayed fracture.

The correspondence can be achieved by the use of a technique of experimentally determining the "stress margin" above with the forming strain as a variable by a delayed fracture test in a stress loaded state. More specifically, an index for directly assessing the risk of the delayed fracture can be obtained for a formed component without causing such problems with the calculation and the measurement.

It is supposed to assess the stress margin in a hydrogen entry environment condition to which automotive components are actually exposed. In this case, the stress margin itself can be regarded as the margin until the occurrence of the delayed fracture in the sheared end surfaces of the automotive components.

Further, the stress margin has the stress as the unit, and is expressed by the stress. Therefore, the stress margin can be presumed even when the external load stress to be applied to components in assembly, use, or the like, is added, in addition to the residual stress by the forming of the components. More specifically, it can be presumed that the delayed fracture does not occur unless the stress margin is exceeded.

Thus, the index of the stress margin that is the allowance of the external load stress in which the delayed fracture does not occur and that corresponds to the amount of strain is simple. In addition, the index is an excellent assessment index of the delayed fracture, the index which allows the assessment as the margin having a stress dimension.

On the contrary, a technique of changing the hydrogen entry environment while the stress load value is kept at a constant value can also be supposed. However, the technique has a problem with the addition of the external load stress by the deformation of components in assembly or in use, for example, to the residual stress by the forming of the components described above. More specifically, the technique is less useful in that the assessment of the margin is impossible as compared with a case of using the stress as the standard.

The forming strain above is a strain in the extension direction of the sheared surface.

Further, with respect to practical assessment methods, the present inventors have found the following findings (4) and (5).
(4) For the sheared end surface, the limit load stress in which the delayed fracture does not occur is determined by changing the amount of the forming strain applied to the metal sheet after shearing processing, loading stress to the metal sheet, and setting the metal sheet under a hydrogen environment. This makes it possible to set the stress margin as a function of the amount of the forming strain.
(5) As a method for introducing the forming strain of tension and compression to the sheared end surface into an assessment test piece, a uniaxial tensile deformation or a uniaxial compressive deformation is desirable. This is for the following reasons. In the uniaxial forming, springback after forming results in almost zero residual stress after forming in a portion other than the sheared end surface. Thus, it is because the influence is negligible. Accordingly, the application of the forming strain by the uniaxial tension or compression is advantageous in the following point. More specifically, the external load stress at the limit where the delayed fracture does not occur in the sheared end surface after additional processing can be assessed as the "stress margin" as it is, which is the simplest.

Herein, for the test piece to be assessed for the stress margin, a test piece obtained by laboratory-like shearing may be used. As the test piece, the sheared end surface of a formed component after press forming may be partially cut out.

Further, the present inventors have devised the following technique as a method for assessing and predicting the occurrence of the delayed fracture in the sheared end surface in formed components with automobile components in mind using the "stress margin" thus obtained. An example of the technique is described in the first to fourth items below.

### (First)

First, a test is applied using by methods (4) and (5) above to a test piece, and the stress margin corresponding to the amount of strain by tension and compression is measured. Then, the stress margin with the amount of strain as a variable is determined.

Herein, the hydrogen entry environment and the placement time in the environment are preferably set to such conditions that the amount of hydrogen entering the test piece is the target hydrogen entry amount. The target hydrogen entry amount is the amount of entering hydrogen preset as the allowable upper limit in actual automotive components.

As the amount of strain of the forming strain to be applied to the sheared end surface, the amount of strain is preferably set to 0.1% or more considering the amount having sufficient influence on the delayed fracture characteristics. As the amount of strain having a greater degree of influence, the amount of strain is 0.5% or more. When plastic strain is introduced, particularly the delayed fracture assessment according to the present invention is effective. Therefore, the amount of the plastic strain to the sheared end surface can be set as the assessment index in place of the forming strain. For the load stress to the test piece, any parameter related to stress, such as first principal stress or Mises stress, can be used in the present disclosure.

### (Second)

Second, a forming analysis (simulation analysis by a computer) by CAE of the formed component is performed by known methods. Then, the amount of the forming strain by tension and compression and the residual stress after forming in various places of the sheared end surface in the formed component are calculated.

### (Third)

Third, the assumed external load stress to the formed component in assumed assembly of the formed component to another component or in use after the assembly is added to the residual stress after forming. This determines the total stress of the residual stress after forming and the external load stress.

### (Fourth)

Fourth, for various places of the sheared end surface to the metal sheet, the stress margin corresponding to the amount of strain by tension and compression and the total stress of the residual stress after forming and the external load stress in the formed component are compared with each other.

A place where the stress margin is exceeded in various places of the sheared end surface is determined to have a risk of the delayed fracture. However, the stress margin can be set to be smaller than an actually measured value considering a safety factor.

Further, it is possible to design a metal component shape and a manufacturing step (forming conditions) such that is predicted that the delayed fracture does not occur, referring to the stress margin. As a forming condition, the addition of a press step to relieve the residual stress can be mentioned as an example.

Next, an embodiment of the present invention based on the present disclosure above is described with reference to the drawings.

In the following description, a description is given assuming press forming as the forming for obtaining the formed component.

The method for assessing the delayed fracture in the formed component according to the present disclosure is suitable for a pressed component (formed component) constituting automotive components. However, the application target is not limited to the pressed component. The method is applicable to various metal components having a sheared end surface and having the risk of the delayed fracture. For example, the application to the manufacture of metal components by various forming methods including roll forming, incremental forming, bulge forming, hot stamping, hammer forging, forming to tailored blank articles, and the like is assumed.

### (Configuration)

The method for assessing delayed fracture characteristics of a formed component according to this embodiment includes manufacturing a formed component by press forming a metal sheet containing a high-strength steel sheet. The method includes assessing the delayed fracture characteristics in a sheared end surface of the formed component to be assembled to another component for use. The present invention exhibits the effects particularly when the metal sheet is the high-strength steel sheet.

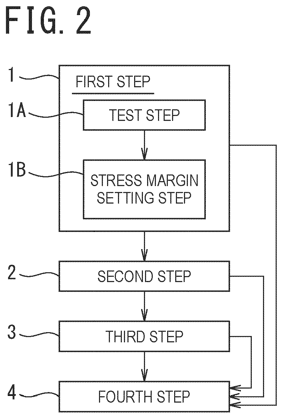

The method for assessing delayed fracture characteristics of this embodiment includes a first step 1, a second step 2, a third step 3, and a fourth step 4 as illustrated in FIG. 2.

### (First step 1)

The first step 1 includes a test step 1A and a stress margin setting step 1B.

The test step 1A is a step of carrying out an actual experiment, and includes a step of restraining a metal sheet in a state where a predetermined load stress is loaded to a sheared surface of the metal sheet. Further, the test step 1A includes a step of placing the metal sheet for a predetermined time in a predetermined hydrogen entry environment in the restrained state.

In the stress margin setting step 1B, a load stress at the limit where the delayed fracture in the sheared surface of the metal sheet does not occur is determined for each amount of strain based on the results of the test by the test step 1A. Then, in the stress margin setting step 1B, the stress margin being an allowance value of an external load stress in which the delayed fracture does not occur, corresponding to the amount of strain is determined by the determined information.

More specifically, in this embodiment, the "stress margin", which is an index newly set in the present disclosure, is determined as an assessment index for the method for assessing delayed fracture characteristics.

The "stress margin" in the present disclosure is the allowance of the external load stress, in which the delayed fracture does not occur, corresponding to the amount of strain possessed by the sheared end surface.

Herein, the external load stress is a stress that occurs in press forming into a desired product shape or in restraining when the product is assembled.

In the following embodiment, the stress margin is set as a value (function) in which a forming strain, which is one parameter of test conditions, is set as a variable.

The stress margin containing the limit load stress may be a value obtained by multiplying the limit load stress determined by the test by a predetermined safety factor. The stress margin containing the limit load stress may also be set to a value smaller than the limit load stress determined from the test by the safety margin.

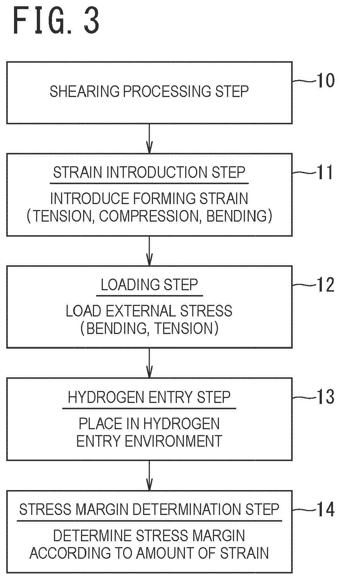

The first step 1 includes five steps as illustrated in FIG. 3, for example.

In FIG. 1, the reference numerals 10 to 13 correspond to the test step 1A and a step denoted by the reference numeral 14 corresponds to the stress margin setting step 1B. For the test step 1A, known methods may be adopted.

The steps are described.

### <Shearing processing step 10>

A shearing processing step 10 is a step of preparing a test piece from a metal sheet having the same conditions as those of the metal sheet to be processed into the formed component. The shearing processing step 10 prepares a test piece having a sheared end surface. This step 10 is performed for applying shearing processing to a metal sheet containing the same material and having the same thickness as those of the metal sheet to be assessed and determining the stress margin.

### <Strain introduction step 11>

A strain introduction step 11 is a step of applying a forming strain to at least a part of the sheared end surface of the test piece. The forming strain to be applied is a strain along the extension direction of the sheared end surface.

The forming strain to be applied has a magnitude of 0.1% or more, for example.

The application of the forming strain is carried out by applying uniaxial tension or uniaxial compression to the test piece, for example. The application of the forming strain is carried out by bending the test piece in the sheet thickness direction, for example.

### <Loading step 12>

A loading step 12 is a step of loading a predetermined external load stress to the sheared end surface of the test piece and restraining the test piece in the loaded state. A method for loading a stress is performed by loading a tensile stress or loading a bending stress, for example. In this case, a method for loading a bending stress using a jig is particularly desirable from the viewpoint of simplicity.

### <Hydrogen entry step 13>

In a hydrogen entry step 13, the test piece which has been restrained after the loading of the external load in the loading step 12 is placed for a predetermined time in a predetermined hydrogen entry environment.
Then, the hydrogen entry step 13 is a step of assessing the occurrence state of cracking with the test piece in that state.

At this time, the hydrogen entry environment and the placement time are preferably set to conditions under which a target hydrogen entry amount is achieved. The target hydrogen entry amount is the hydrogen entry amount equivalent to the amount of hydrogen that is estimated to enter in an environment in which the material to be assessed is actually used, for example.

The placement of the test piece in the hydrogen entry environment is performed by immersing the test piece in a bath containing an acid solution, such as hydrochloric acid or an aqueous NH₄SCN solution, for example. The concentration of the acid solution and the immersion time are set to achieve a condition under which hydrogen in the amount preset as the allowable upper limit enters the test piece.

For each test piece prepared in the shearing processing step 10, the strain introduction step 11 to the hydrogen entry step 13 above are carried out while the conditions of the forming strain to be applied and the load stress to be loaded are changed.

### <Stress margin determination step 14>

In a stress margin determination step 14, the limit load stress, which is a load stress at the limit where the delayed fracture in the sheared surface of the metal sheet does not occur, is assessed based on the results of the test above. Then, the stress margin to the occurrence of the delayed fracture in the sheared end surface of the metal sheet is determined based on the limit load stress. Specifically, the limit load stress is set as the stress margin under the test conditions.

For example, the external load stress in which cracking occurs and a value of the limit load stress are determined based on the test conditions of each test piece and the assessment results of the occurrence or non-occurrence of cracking in the sheared end surface. The test conditions as used herein are the conditions of the forming strain and the external load stress, for example. The external load stress in which cracking occurs refers to an external load stress, in which cracking occurs, to the same forming strain. The value of the limit load stress is a value of the limit load stress that is the boundary value with an external load stress in which no cracking occurs. The boundary value is the maximum value of the external load stress in which no cracking occurs, for example, or the like.

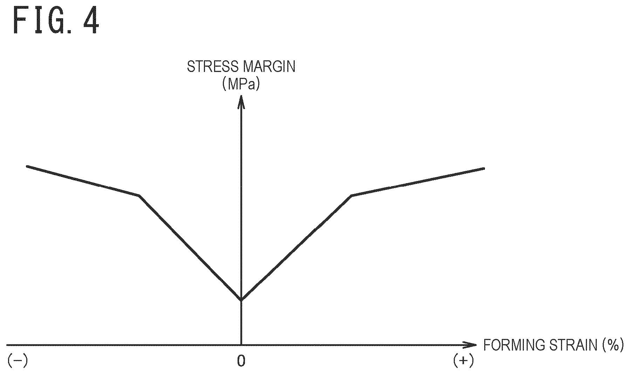

This is organized for a plurality of forming strains, and a plurality of pieces of data of forming strain, limit load stress is acquired. Then, the value (function) of the limit load stress with the forming strain as a variable is determined as data expressing the stress margin as represented by the graph in FIG. 4. The stress margin is the allowance value of the external load stress, in which the delayed fracture does not occur, corresponding to the strain. More specifically, the stress margin is described as a function with the forming strain by tension and compression as a variable, for example.

In FIG. 4, the residual stress of the sheared end surface increases or decreases corresponding to the forming strain. FIG. 4 illustrates a case where the stress margin of the delayed fracture increases when the absolute value of the forming strain is larger. However, it is also assumed that the stress margin of the delayed fracture conversely decreases by the forming strain, depending on the material or the state of the sheared end surface. This occurs due to the occurrence of cracking or damage in the sheared end surface by the forming strain to be applied, for example.

In this embodiment, a comparison with the stress margin determined as described above enables the following assessment. More specifically, a test piece having a sheared end surface, which was not used for the assessment of the stress margin, can also be assessed for a possibility of the delayed fracture without performing the test. The possibility of the delayed fracture is the possibility of the delayed fracture to the external load (load stress) to be load to the metal sheet.

### (Second step 2)

In the second step 2, a forming analysis (CAE analysis) is performed for processing of press forming a metal sheet into a target formed component. Then, processing of determining the residual stress and the amount of strain in various places of the sheared end surface of the formed component is carried out, the residual stress and the amount of strain being generated by forming a metal sheet into the formed component.

### (Third step 3)

In the third step 3, the load stress is determined which is to be loaded to various places of the sheared end surface of the formed component by assembling the formed component to another component. For example, the load stress is generated by assembling the formed component while the formed component is being deformed by the amount of springback in mold release.

For the end surface, the deformation of the formed component generated in assembly is smaller than a deformation in press forming. Therefore, a strain generated in assembly was ignored.

When the formed component is an automotive structural component, the formed component is assembled to a frame of an automobile singly or after assembled to another component. Thus, the formed component is assembled to another component or assembled to the frame of an automobile. At that time, the formed component is sometimes assembled in a state where a predetermined load stress is applied as an external load. The external load is determined as the load stress.

The load stress is measured by assembling an actually manufactured formed component in a state where a gauge or another sensor is attached to the formed component, for example. For the load stress, a stress to be input when a target formed component is assembled to another component may also be determined by carrying out a known CAE analysis.

The delayed fracture targeted by the present disclosure occurs by the use with time of the formed component. However, the delayed fracture targeted by the present disclosure is not a phenomenon that occurs immediately after the formed component is assembled to another component. Therefore, it is also possible to determine the external load after actual assembly.

### (Fourth step 4)

In the fourth step 4, the margin of the delayed fracture in the formed component is assessed based on the stress margin and the total stress of the metal sheet. The stress margin of the metal sheet is the stress margin of the metal sheet with the amount of strain determined in the second step 2 as a variable. The total stress is a total stress of the residual stress determined in the second step 2 above and the load stress determined in the third step 3 above.

Herein, for the residual stress and the load stress, from which the total stress is calculated, the residual stress and the load stress generated in the same region (same place) in the sheared end surface are combined. More specifically, the total stress is calculated for each of various places of the sheared end surface.

The total stress may be calculated only for a portion where the amount of strain is equal to or larger than a predetermined threshold.

In the fourth step 4, it is carried out for each of various places of the sheared end surface, for example. In the fourth step 4, the stress margin corresponding to the amount of strain determined in the second step 2 and the total stress of the residual stress by CAE of the formed component and the external load stress in assembly. Then, the occurrence or non-occurrence of the delayed fracture is assessed by the comparison. Alternatively, it may be acceptable that the stress margin containing a difference between the stress margin and the total stress is calculated and the degree of the stress margin to the delayed fracture is assessed.

For example, a forming analysis by CAE is applied to an automotive component to be assessed for the occurrence of the delayed fracture. Then, the amount of strain by tension and compression and the residual stress after forming in various places of the sheared end surface are calculated. Further, the external load stress that is assumed in assembly or in use of the component is added to the residual stress after forming, so that the total stress is determined. It is determined whether the total of the residual stress after forming and the external load stress in assembly or in use exceeds the stress margin in various places of the sheared end surface. A case where the total stress exceeds the stress margin is determined to have a high risk of the delayed fracture. However, the stress margin can also be set to be smaller than an actually measured value considering the safety factor. Further, it is possible to design a metal component shape and a manufacturing step such that the occurrence of the delayed fracture is not predicted referring to the above-described stress margin.

Herein, as an example of the strain output from the CAE in the second step 2, a strain in a direction parallel to the sheared end surface is preferably used in the present disclosure. As the strain to be used, parameters related to other strains, such as a plastic strain, may also be used.

Similarly, a first principal stress is desirably used also for the residual stress and the load stress. Further, parameters related to other stresses, such as Mises stress, may also be used.

### (Processing flow)

An example of a processing flow used in the assessment method of the present disclosure described above is described.

In this processing flow, the stress margin corresponding to the forming strain determined in the first step 1 is stored in a storage unit. Then, a computer is caused to refer to the stored stress margin, and the value of the stress margin corresponding to the input amount of strain of the forming strain is determined. Then, the computer is caused to execute processing of assessing the possibility of the delayed fracture to the amount of strain of the input forming strain and the external load stress.

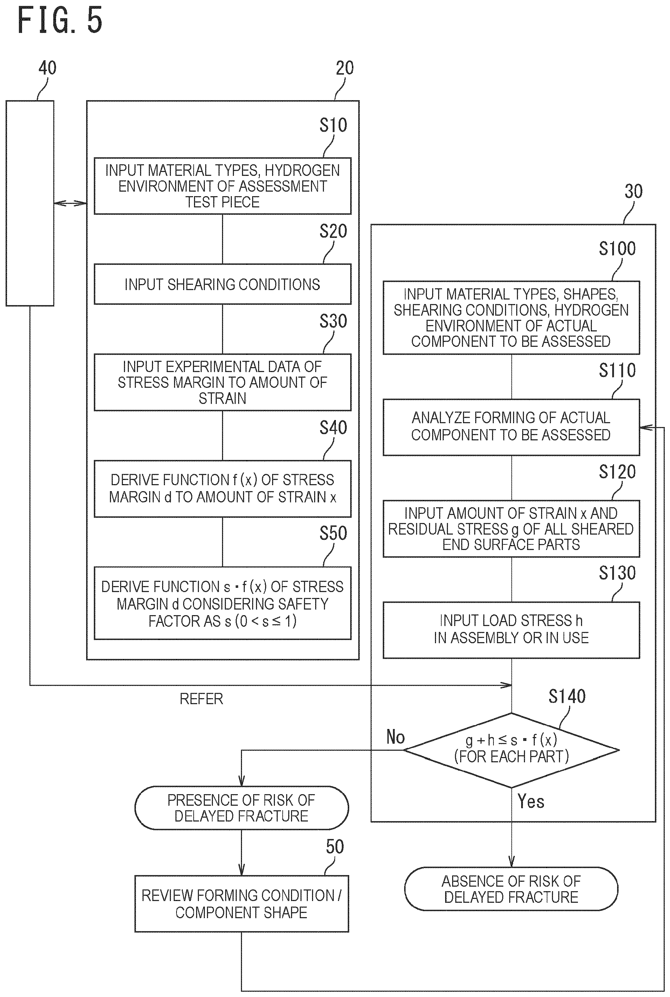

This processing flow is described referring to FIG. 5. When the assessment is performed by the processing illustrated in FIG. 5, the formed component can be more efficiently assessed for the delayed fracture.

The example illustrated in FIG. 5 includes a stress margin calculation unit 20, an assessment main unit 30, a storage unit 40, and a reviewing unit 50. Processing flows of performing processing of the stress margin calculation unit 20 and the assessment main unit 30 are stored in the storage unit 40, such as a RAM or a ROM, of a computer. Each processing is executed by the computer.

### <Storage unit 40>

The storage unit 40 includes a recording medium, such as a database.

The storage unit 40 stores data of a stress margin d determined with the forming strain as a variable, with the test conditions as variables for each of metal sheet material conditions, hydrogen environment conditions, and shearing conditions. The data are acquired by repeating the test from the shearing processing step 10 to the stress margin determination step 14 while the amount of the forming strain is being variously changed.

### <Stress margin calculation unit 20>

The stress margin calculation unit 20 corresponds to the first step 1.

The stress margin calculation unit 20 first prompts an input of the basic conditions of the assessment in Step S10, and then acquires the input by an input operation of an operator. The basic conditions of the assessment are material type (steel grade and thickness) conditions, hydrogen environment conditions (acidity and placement time), which are delayed fracture conditions, and the like.

Next, in Step S20, an input of the shearing conditions is promoted, and the input is acquired by an input operation of an operator.

Next, in Step S30, a data group matched with the conditions input in Step S10 and Step S20 are acquired from the storage unit 40. The data group is a data group of the stress margin to each amount of strain. The data group is also a set of data of amount of strain, stress margin value.

Alternatively, an input of the data group of the stress margin to each amount of strain determined by the test is prompted, and the input information is acquired by an input operation of an operator. The acquired data are stored in the storage unit 40.

Next, in Step S40, the data group of the stress margin to the amount of strain acquired in Step S30 is referred to. Then, in Step S40, arithmetic processing of determining the stress margin d as a function f (x) with the amount of strain x as a variable is executed by a known processing system.

Next, in Step S50, the function of the stress margin d determined in Step S40 is changed to an equation considering a safety factor s (: 0 < s ≤ 1) as in the following equation. $d = s ⋅ f \left(x\right)$

Then, information of the function of the stress margin d determined above is stored in the storage unit 40 with the test conditions as a key.

### <Assessment main unit 30>

The assessment main unit 30 first prompts an input of conditions of an actual component to be assessed in Step S100. The conditions of the actual component include, for example, component conditions, such as material types and forming shapes of the actual component, metal sheet conditions, such as shearing conditions, forming conditions, and hydrogen environment conditions, which are delayed fracture conditions. Then, the input is acquired by an input operation of an operator. The material types are a steel grade and a thickness, for example. The hydrogen environment conditions are acidity and placement time, for example.

Next, in Step S110, a forming analysis by CAE is carried out based on the conditions of the metal sheet and the shearing processing acquired in Step S100, the shape information of the actual component to be formed, and the like.

Next, in Step S120, the amount of strain x and the residual stress g are determined for all sheared end surface parts of the actual component from the processing results of the forming analysis in Step S110.

In Step S130, an input of a load stress h in assembly or in use is prompted, and the load stress h is acquired by an input of an operator.

In Step S140, the information of the function "s·f (x)" of the stress margin d matched with the conditions input in Step S100 is acquired from the storage unit 40. Then, for each sheared end surface place, the stress margin d and the total stress (g + h) are compared with each other. The stress margin d is the stress margin d corresponding to the amount of strain x input in Step S110. The total stress (g + h) is the total stress of the residual stress g output in Step S120 and the load stress h input in Step S130. Then, it is determined whether there is the risk of the delayed fracture based on the comparison.

Herein, in Step S140 in FIG. 5, it is determined whether there is the risk of the delayed fracture. The margin (= d - (g + h)) of the delayed fracture may be output together with the determination.

For the stress margin calculation unit 20, it may be acceptable that calculation processing is separately carried out, and a function of the stress margin d with the input values in Steps S10 to S20 as conditions.
Then, the determined function may be input in the storage unit 40 as data with the input values in Steps S10 to S20 as a key.

### <Reviewing unit 50>

The reviewing unit 50 carries out reviewing processing to the forming conditions and the component shapes and outputs the changed forming conditions and component shapes by the reviewing to Step S120.

The reviewing processing is performed, for example, for a place of the sheared end surface where the margin (= d - (g + h)) of the delayed fracture is a negative value. For example, the forming conditions or the component shapes are changed such that the residual stress decreases by the amount of stress that exceeds the absolute value of the margin. For the reviewing of the forming conditions, the residual stress is relieved by increasing the number of steps of a press step, for example.

When the component is large and is difficult to be manually assessed for all sheared end surfaces, the assessment performed by the processing flow as illustrated in FIG. 5 enables an automatic and efficient assessment. When it is determined that there is the risk of the delayed fracture by the assessment, the forming conditions can also be repeatedly reviewed until it is determined that there is no risk of the delayed fracture.

### EXAMPLES

Examples of this embodiment are described.

### (Example 1)

In this example, a description is given using a test material X containing a metal sheet being a 1470 MPa (tensile strength) class steel sheet having a thickness of 1.0 mm as a metal sheet to be assessed.

The present invention is not limited to the sheet conditions of the test material X. The present invention can be applied to various metal materials including high-strength steel sheets having a tensile strength of 980 MPa or more in which the delayed fracture occurs in a sheared end surface.

First, the test material X was sheared by shearing processing to prepare a test piece having a 100 mm long straight sheared end surface. The width of the test piece in shearing was set to 30 mm, and the test piece was formed into a 100 mm × 30 mm strip shape. A clearance in the shearing processing was set to 12% with respect to the sheet thickness. In the description in the embodiment above, the description is given taking the case where a single shearing condition is used as an example. However, when the shearing conditions, such as the clearance in the shearing processing, change, the assessment corresponding to the change is possible. More specifically, the stress margin under the shearing condition may be determined.

Next, a forming strain by tension or compression along the extension direction of the sheared end surface was applied to the sheared end surface of the test piece. In this example, the forming strain was applied by a uniaxial load testing machine with both ends of the test piece clamped. This example gives a description of the case where the forming strain is tension or compression. Even when the forming strain is a deformation by bending, it is confirmed that similar results are obtained. Further, a test piece that was kept as-sheared without applying the forming strain was also prepared.

Next, external restraint was applied to each test piece by four-point bending using a jig, and a stress was loaded to a center part of the sheared end surface of the test piece. A tensile stress was loaded with the burr side in shearing as the outside of the bending.

Herein, the magnitude of the load stress was determined as follows. A first principal stress-first principal strain relation in each of a width center part and a tip part of the test piece was determined by CAE. Then, the measurement was performed by measuring and associating the amount of strain when the test piece was actually bent.

In this example, the case of the four-point bending is described as a method for loading stress. By also the other bending loading methods and loading methods, such as uniaxial tension, results having similar tendency are obtained. In this example, a tensile stress was loaded with the burr side in shearing as the outside of the bending in stress loading. Similarly, the surface on the side opposite to the burr side can also be similarly assessed.

In this example, a load stress to be loaded to each test piece was changed in 100 MPa increments as shown in tables. Then, a plurality of test pieces was prepared for each forming strain condition.

The test pieces loaded with the load stress were immersed for 96 hours in a bath of a thiocyanate solution having a pH of 6, and then, the delayed fracture characteristics were assessed based on the occurrence or non-occurrence of cracking by a delayed fracture after 96 hours.

The conditions and the assessment results above are shown in Tables 1 to 11.

The tables are grouped for the amount of strain of the forming strain.

**[Table 1]**

| Amount of strain % | Load stress/MPa | Delayed fracture |
|---|---|---|
| | 500 | ○ |
| | 600 | ○ |
| | 700 | ○ |
| 0.0 | 800 | ○ |
| | 900 | ○ |
| | 1000 | × |
| | 1100 | × |

**[Table 2]**

| Amount of strain % | Load stress/MPa | Delayed fracture |
|---|---|---|
| | 600 | ○ |
| | 700 | ○ |
| | 800 | ○ |
| 0.1 | 900 | ○ |
| | 1000 | ○ |
| | 1100 | × |
| | 1200 | × |

**[Table 3]**

| Amount of strain % | Load stress/MPa | Delayed fracture |
|---|---|---|
| | 700 | ○ |
| | 800 | ○ |
| | 900 | ○ |
| 0.5 | 1000 | ○ |
| | 1100 | ○ |
| | 1200 | × |
| | 1300 | × |

**[Table 4]**

| Amount of strain % | Load stress/MPa | Delayed fracture |
|---|---|---|
| | 800 | ○ |
| | 900 | ○ |
| | 1000 | ○ |
| 1.0 | 1100 | ○ |
| | 1200 | ○ |
| | 1300 | × |
| | 1400 | × |

**[Table 5]**

| Amount of strain % | Load stress/MPa | Delayed fracture |
|---|---|---|
| | 1000 | ○ |
| | 1100 | ○ |
| | 1200 | ○ |
| 2.0 | 1300 | ○ |
| | 1400 | ○ |
| | 1500 | × |
| | 1600 | × |

**[Table 6]**

| Amount of strain % | Load stress/MPa | Delayed fracture |
|---|---|---|
| | 1200 | ○ |
| | 1300 | ○ |
| | 1400 | ○ |
| 3.0 | 1500 | ○ |
| | 1600 | ○ |
| | 1700 | × |
| | 1800 | × |

**[Table 7]**

| Amount of strain % | Load stress/MPa | Delayed fracture |
|---|---|---|
| | 600 | ○ |
| | 700 | ○ |
| | 800 | ○ |
| -0.1 | 900 | ○ |
| | 1000 | ○ |
| | 1100 | × |
| | 1200 | × |

**[Table 8]**

| Amount of strain % | Load stress/MPa | Delayed fracture |
|---|---|---|
| | 700 | ○ |
| | 800 | ○ |
| | 900 | ○ |
| -0.5 | 1000 | ○ |
| | 1100 | ○ |
| | 1200 | × |
| | 1300 | × |

**[Table 9]**

| Amount of strain % | Load stress/MPa | Delayed fracture |
|---|---|---|
| | 800 | ○ |
| | 900 | ○ |
| | 1000 | ○ |
| -1.0 | 1100 | ○ |
| | 1200 | ○ |
| | 1300 | × |
| | 1400 | × |

**[Table 10]**

| Amount of strain % | Load stress/MPa | Delayed fracture |
|---|---|---|
| | 1000 | ○ |
| | 1100 | ○ |
| | 1200 | ○ |
| -2.0 | 1300 | ○ |
| | 1400 | ○ |
| | 1500 | × |
| | 1600 | × |

**[Table 11]**

| Amount of strain % | Load stress/MPa | Delayed fracture |
|---|---|---|
| | 1200 | ○ |
| | 1300 | ○ |
| | 1400 | ○ |
| -3.0 | 1500 | ○ |
| | 1600 | ○ |
| | 1700 | × |
| | 1800 | × |

Each table shows the occurrence or non-occurrence of the delayed fracture for each load stress different depending on the amount of strain with the tension being positive and the compression being negative.

As is understood from Tables 1 to 11, the larger the absolute value of the amount of strain of the forming strain, the larger the limit load stress. In this example, the limit load stress with the forming strain as a variable is the stress margin.

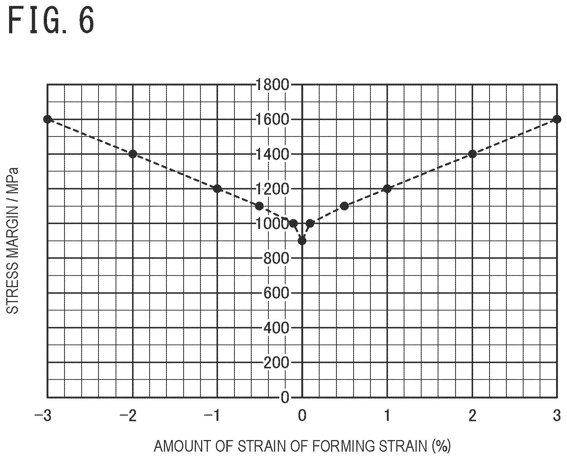

In FIG. 6, the stress margin is determined from the load stress at the limit where the delayed fracture did not occur and the stress margin is illustrated as the function of the strain.

It is found that the stress margin corresponding to the forming strain after shearing can be described as described above. This example illustrates the case where the stress margin increases by the forming strain after shearing. Conversely, a similar assessment is possible also when the stress margin decreases by the forming strain after shearing.

### (Example 2)

Next, an example of the delayed fracture determination using the stress margin corresponding to the forming strain after shearing determined in Example 1 is described.

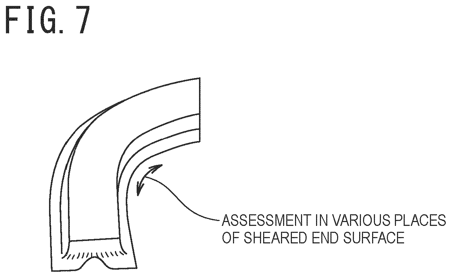

In Example 2, an actual component in an automotive component was assumed, and an actual component having a sheared end surface having the shape illustrated in FIG. 7 was assumed. Then, press forming into the shape of the actual component was performed using the test material X. In the component shape illustrated in FIG. 7, a strain is input into an end surface.

At this time, the calculation by CAE was performed for ten places of representative places A to J (not illustrated) in a representative sheared end surface part in the component after forming. More specifically, the forming strain and the residual stress on the front surface on the burr side in shearing were calculated by CAE.

A 1.0 mm square shell element was used for the CAE, and a forming and springback step was calculated by a dynamic explicit method.

In this example, the actual component illustrated in FIG. 7 is illustrated as an example. However, without being limited to the component, a similar assessment is possible insofar as it is a component having a sheared end surface of a material having a risk of the delayed fracture.

Thereafter, a delayed fracture test was applied to the actual component after forming. However, in the delayed fracture test, the actual component was immersed in a bath of a thiocyanate solution having a pH of 6, and the delayed fracture was assessed based on the occurrence or non-occurrence of cracking by a delayed fracture after 96 hours.

The CAE results of the forming strain after shearing and the residual stress are shown in Table 12 together with the occurrence or non-occurrence of the delayed fracture.

**[Table 12]**

| Component place | Amount of forming strain % | Forming residual stress/MPa | Delayed fracture |
|---|---|---|---|
| A | 0.0 | 812 | ○ |
| B | 0.4 | 1356 | × |
| C | 0.8 | 985 | ○ |
| D | 1.5 | 901 | ○ |
| E | 2.0 | 1264 | ○ |
| F | -0.6 | 820 | ○ |
| G | -1.1 | 1489 | × |
| H | -1.6 | 1142 | ○ |
| I | -2.3 | 513 | ○ |
| J | -2.8 | 1642 | × |

### (Example 3)

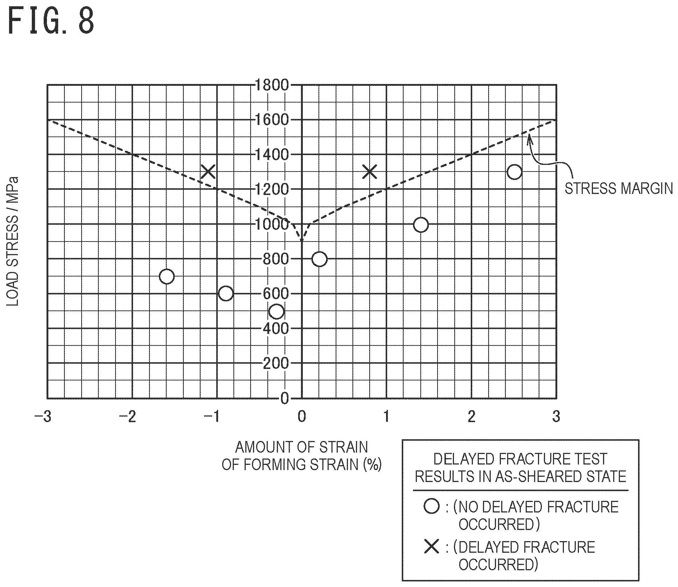

Next, in FIG. 8, the forming strain after shearing, the residual stress, and the occurrence or non-occurrence of the delayed fracture shown in Table 12 are plotted with the stress margin in FIG. 6 for comparison. FIG. 8 showed that the occurrence or non-occurrence of the delayed fracture in the sheared end surface in the actual component can be predicted based on whether the stress margin line is exceeded.

Further, the external stress load in assembly or in use of the actual component was assumed to be 300 MPa at maximum in all places. The maximum amount of the external load stress in assembly or in use was estimated by measuring, using a strain gauge, the amount of an elastic deformation of the actual component in assembly or in assumed use.

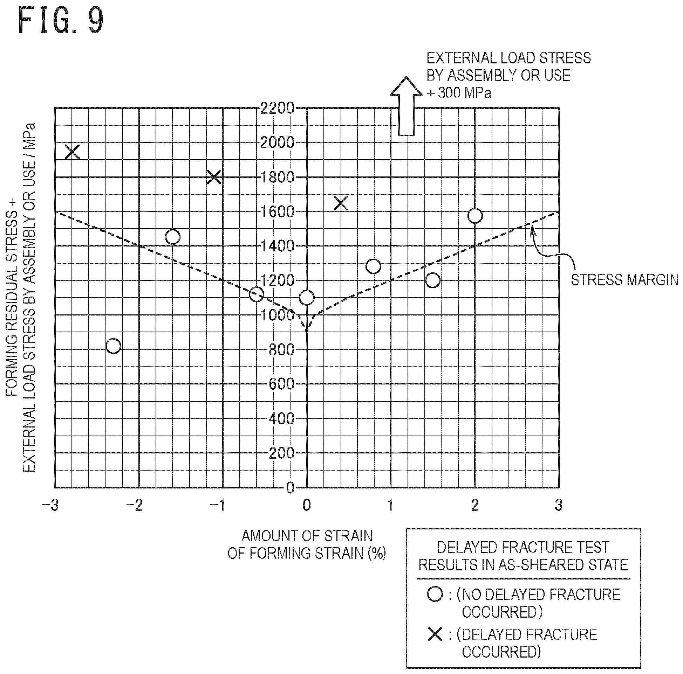

The forming strain after shearing and the residual stress were determined in the representative places A to J when the stress was added. FIG. 9 illustrates that it was plotted with the stress margin in FIG. 6 for comparison together with the occurrence or non-occurrence of the delayed fracture in the as-sheared state.

In FIG. 9, even when the delayed fracture did not occur in the delayed fracture test after the forming of the component, there were places where the stress margin was exceeded considering the external stress load in assembly or in use. In these places, the delayed fracture did not occur in the delayed fracture test in an as-formed state. However, it was found that, when the load stress in assembly or in use was considered, the places can be said to be potential delayed fracture risky places having a possibility of the occurrence of the delayed fracture.

Table 13 is an example that aims to prevent the occurrence of the delayed fracture even when the stress in assembly or in use was considered referring to the stress margin. Therefore, the example is an example in which an intermediate forming step is newly provided before a final forming step for the same formed component. The forming strain and the residual stress in the representative places A to J of the component when the stress and the amount of strain were changed by providing the intermediate forming step are expressed.

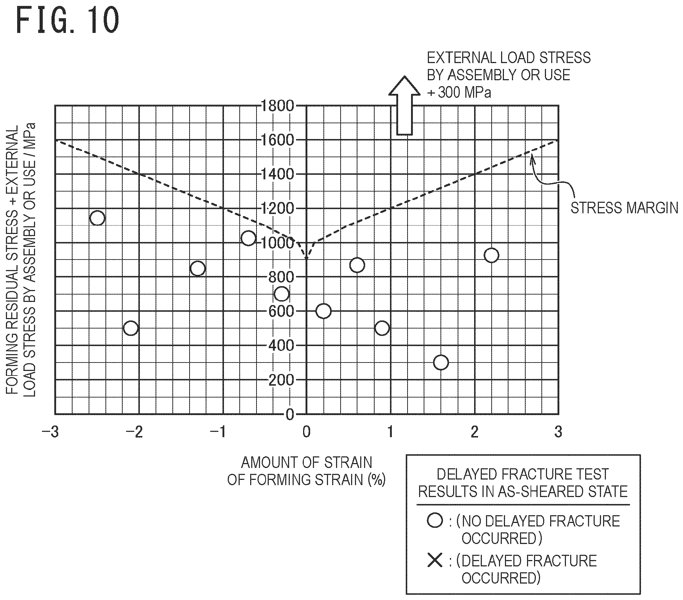

FIG. 10 illustrates that an assembly stress assumed to be 300 MPa at maximum was loaded and a comparison with the stress margin in FIG. 6 was performed for the component places in Table 13. In FIG. 10, the stress margin is not exceeded even when the stress in assembly or in use are considered. This predicts that the risk of the delayed fracture is low. It was found that the use of the stress margin as a reference makes it possible to design automotive components and manufacturing steps thereof that do not cause the delayed fracture as described above.

**[Table 13]**

| Component place | Amount of forming strain % | Forming residual stress/MPa | Consideration in assembly or in use | Delayed fracture |
|---|---|---|---|---|
| A | 0.2 | 302 | 602 | ○ |
| B | 0.6 | 578 | 878 | ○ |
| C | 0.9 | 209 | 509 | ○ |
| D | 1.6 | 13 | 313 | ○ |
| E | 2.2 | 623 | 923 | ○ |
| F | -0.3 | 401 | 701 | ○ |
| G | -0.7 | 719 | 1019 | ○ |
| H | -1.3 | 547 | 847 | ○ |
| I | -2.1 | 210 | 510 | ○ |
| J | -2.5 | 841 | 1141 | ○ |

### (Others)

The present disclosure can take the following configurations.
(1) A method for assessing delayed fracture characteristics of a formed component for assessing the delayed fracture characteristics in a sheared end surface of a formed component, the formed component being manufactured by forming a metal sheet containing a high-strength steel sheet and being assembled to another component for use, the method including:
   a first step of determining a stress margin being an allowance value of an external load stress, in which a delayed fracture in a sheared surface of the metal sheet does not occur, with an amount of strain as a variable based on results of a test including a step of restraining the metal sheet in a state where a predetermined load stress is loaded to the sheared surface of the metal sheet and a step of placing the metal sheet for a predetermined time in a predetermined hydrogen entry environment in the restrained state;
   a second step of performing forming analysis of forming the metal sheet into the formed component and determining a residual stress and the amount of strain in the sheared end surface of the formed component generated when the metal sheet is formed into the formed component;
   a third step of determining a load stress to be loaded to the sheared end surface by assembling the formed component to another component; and
   a fourth step of assessing a margin of the delayed fracture in the formed component based on the stress margin of the metal sheet with the amount of strain determined in the second step as a variable and a total stress of the residual stress determined in the second step and the load stress determined in the third step.
(2) A fifth step of changing one of the shape of the formed component and conditions of the forming is provided when it is assessed in the fourth step that the delayed fracture occurs in the residual stress and the amount of strain determined in the second step, and
   in the fifth step, the change is performed in a direction where the residual stress determined in the second step decreases for a place where it is assessed that the delayed fracture occurs.
(3) The metal sheet is a steel sheet having a tensile strength of 980 MPa or more.
(4) A method for manufacturing a formed component including: manufacturing a formed component by performing forming under conditions, under which the formed component is assessed to cause no delayed fracture, determined by the method for assessing delayed fracture characteristics of a formed component of the present disclosure.

### Reference Signs List

- 1: first step
- 2: second step
- 3: third step
- 4: fourth step
- 10: shearing step
- 11: strain introduction step
- 12: loading step
- 13: hydrogen entry step
- 14: stress margin determination step
- 20: stress margin calculation unit
- 30: assessment main unit
- 40: storage unit
- 50: reviewing unit
- d: stress margin
- g: residual stress
- h: load stress
- x: amount of strain

## Claims

1. A method for assessing delayed fracture characteristics of a formed component for assessing delayed fracture characteristics in a sheared end surface of the formed component,
the formed component being manufactured by forming a metal sheet containing a high-strength steel sheet and being assembled to another component for use,
the method comprising:
a first step (1) of determining a stress margin (d) being an allowance value of an external load stress, in which a delayed fracture in a sheared surface of the metal sheet does not occur, with an amount of strain as a variable based on results of a test including a step (12) of restraining the metal sheet in a state where a predetermined load stress is loaded to the sheared surface of the metal sheet and a step (13) of placing the metal sheet for a predetermined time in a predetermined hydrogen entry environment in the restrained state;
a second step (2) of performing forming analysis of forming the metal sheet into the formed component and determining a residual stress (g) and the amount of strain (x) in the sheared end surface of the formed component generated when the metal sheet is formed into the formed component;
a third step (3) of determining a load stress (h) to be loaded to the sheared end surface by assembling the formed component to another component; and
a fourth step (4) of assessing a margin of the delayed fracture in the formed component based on the stress margin (d) of the metal sheet with the amount of strain (x) determined in the second step (2) as a variable and a total stress of the residual stress (g) determined in the second step (2) and the load stress (h) determined in the third step (3).

2. The method for assessing delayed fracture characteristics of a formed component according to claim 1, further comprising:
a fifth step of changing one of a shape of the formed component and conditions of the forming when it is assessed in the fourth step (4) that the delayed fracture occurs in the residual stress (g) and the amount of strain (x) determined in the second step, wherein
in the fifth step, the change is performed in a direction where the residual stress (g) determined in the second step (2) decreases for a place where it is assessed that the delayed fracture occurs.

3. The method for assessing delayed fracture characteristics of a formed component according to claim 1 or 2, wherein the metal sheet is a steel sheet having a tensile strength of 980 MPa or more.

4. A method for manufacturing a formed component comprising:
manufacturing a formed component by performing forming under conditions, under which the formed component is assessed to cause no delayed fracture, determined by the method for assessing delayed fracture characteristics of a formed component according to any one of claims 1 to 3.

## Patentansprüche

1. Verfahren zum Bewerten von Merkmalen einer verzögerten Rissbildung eines Formteils zum Bewerten von Merkmalen einer verzögerten Rissbildung in einer Scherendstirnfläche des Formteils,
wobei das Formteil durch Umformen eines Metallblechs, das ein hochfestes Stahlblech enthält, hergestellt und zur Verwendung an ein anderes Bauteil zusammengebaut wird,
wobei das Verfahren umfasst:
einen ersten Schritt (1) des Bestimmens einer Spannungsreserve (d), die ein Toleranzwert einer äußeren Lastspannung ist, bei der eine verzögerte Rissbildung in einer Scherfläche des Metallblechs nicht auftritt, mit einem Dehnungsbetrag als Variable basierend auf Ergebnissen eines Tests, der einen Schritt (12) des Einspannens des Metallblechs in einem Zustand, in dem eine vorbestimmte Lastspannung auf die Scherfläche des Metallblechs aufgebracht ist, und einen Schritt (13) des Einbringens des Metallblechs für eine vorbestimmte Zeit in eine vorbestimmte Wasserstoffeintrittsumgebung in dem eingespannten Zustand beinhaltet;
einen zweiten Schritt (2) des Durchführens einer Umformanalyse des Umformens des Metallblechs in das Formteil und des Bestimmens einer Eigenspannung (g) und des Dehnungsbetrags (x) in der Scherendstirnfläche des Formteils, die erzeugt werden, wenn das Metallblech in das Formteil umgeformt wird;
einen dritten Schritt (3) des Bestimmens einer Lastspannung (h), die auf die Scherendstirnfläche durch Zusammenbauen des Formteils an ein anderes Bauteil aufgebracht werden soll; und
einen vierten Schritt (4) des Bewertens einer Reserve der verzögerten Rissbildung in dem Formteil basierend auf der Spannungsreserve (d) des Metallblechs mit dem im zweiten Schritt (2) bestimmten Dehnungsbetrag (x) als Variable und einer Gesamtspannung aus der im zweiten Schritt (2) bestimmten Eigenspannung (g) und der im dritten Schritt (3) bestimmten Lastspannung (h).

2. Verfahren zum Bewerten von Merkmalen einer verzögerten Rissbildung eines Formteils nach Anspruch 1, ferner umfassend:
einen fünften Schritt des Änderns eines von einer Form des Formteils und Umformbedingungen, wenn im vierten Schritt (4) bewertet wird, dass die verzögerte Rissbildung bei der im zweiten Schritt bestimmten Eigenspannung (g) und dem im zweiten Schritt bestimmten Dehnungsbetrag (x) auftritt, wobei
im fünften Schritt die Änderung in einer Richtung durchgeführt wird, in der die im zweiten Schritt (2) bestimmte Eigenspannung (g) für eine Stelle, an der bewertet wird, dass die verzögerte Rissbildung auftritt, abnimmt.

3. Verfahren zum Bewerten von Merkmalen einer verzögerten Rissbildung eines Formteils nach Anspruch 1 oder 2, wobei das Metallblech ein Stahlblech ist, das eine Zugfestigkeit von 980 MPa oder mehr aufweist.

4. Verfahren zum Herstellen eines Formteils, umfassend:
Herstellen eines Formteils durch Durchführen der Umformung unter Bedingungen, unter denen bewertet wird, dass das Formteil keine verzögerte Rissbildung verursacht, bestimmt durch das Verfahren zum Bewerten von Merkmalen einer verzögerten Rissbildung eines Formteils nach einem der Ansprüche 1 bis 3.

## Revendications

1. Procédé d'évaluation des caractéristiques de fracture retardée d'une pièce formée, pour l'évaluation des caractéristiques de fracture retardée d'une surface d'extrémité cisaillée de la pièce formée,
la pièce formée étant fabriquée par la formation d'une feuille de métal contenant une feuille d'acier à haute résistance et étant assemblée à une autre pièce pour une utilisation,
le procédé comprenant :
une première étape (1) de détermination d'une marge de contrainte (d) étant une valeur de tolérance d'une contrainte de charge externe, dans laquelle une fracture retardée dans une surface cisaillée de la feuille de métal ne se produit pas, avec une quantité de déformation comme variable basée sur les résultats d'un test comportant une étape (12) de retenue de la feuille de métal dans un état où une contrainte de charge prédéterminée est appliquée à la surface cisaillée de la feuille de métal et une étape (13) de placement de la feuille de métal pendant un temps prédéterminé dans un environnement d'entrée d'hydrogène prédéterminé dans l'état restreint ;
une deuxième étape (2) de réalisation d'une analyse de formage de la feuille de métal en la pièce formée et de détermination d'une contrainte résiduelle (g) et la quantité de déformation (x) dans la surface d'extrémité cisaillée de la pièce formée générée lorsque la feuille de métal est formée en la pièce formée ;
une troisième étape (3) de détermination d'une contrainte de charge (h) à appliquer à la surface d'extrémité cisaillée en assemblant la pièce formée à une autre pièce ; et
une quatrième étape (4) d'évaluation d'une marge de la fracture retardée dans la pièce formée basée sur la marge de contrainte (d) de la feuille de métal avec la quantité de déformation (x) déterminée dans la deuxième étape (2) comme une variable et une contrainte totale de la contrainte résiduelle (g) déterminée dans la deuxième étape (2) et la contrainte de charge (h) déterminée dans la troisième étape (3).

2. Procédé d'évaluation des caractéristiques de fracture retardée d'une pièce formée selon la revendication 1, comprenant en outre :
une cinquième étape de modification d'une parmi une forme de la pièce formée et des conditions de formage lorsqu'il est évalué, à la quatrième étape (4), que la fracture retardée se produit dans la contrainte résiduelle (g) et la quantité de déformation (x) déterminées à la deuxième étape, dans lequel
à la cinquième étape, la modification est réalisée dans une direction où la contrainte résiduelle (g) déterminée à la deuxième étape (2) diminue à l'endroit où l'on évalue que la fracture retardée se produit.

3. Procédé d'évaluation des caractéristiques de fracture retardée d'une pièce formée selon la revendication 1 ou 2, dans lequel la feuille de métal est une feuille d'acier ayant une contrainte à la rupture de 980 MPa ou plus.

4. Procédé de fabrication d'une pièce formée comprenant :
la fabrication d'une pièce formée en réalisant un formage dans des conditions dans lesquelles la pièce formée est évaluée comme n'entraînant pas de fracture retardée, déterminées par le procédé d'évaluation des caractéristiques de fracture retardée d'une pièce formée selon l'une quelconque des revendications 1 à 3.
